# EUROPEAN PATENT APPLICATION

(11) **EP 1 103 877 A1**
(43) Date of publication of application: **30.05.2001**
(21) Application number: 99926922.8
(22) Date of filing: 02.07.1999
(51) Int. Cl.: G05D 1/02

(54) **CONTROLLER FOR RUNNING OF TRANSPORT ELECTRIC CAR**

(30) Priority: 05.08.1998 JP 22092598
(71) Applicant: Daifuku Co., Ltd., Osaka-shi, Osaka 555-0012 (JP)
(72) Inventor: NISHINO, Shuzo, Daifuku Co., Ltd., Osaka-shi, Osaka 555-0012 (JP)
(74) Representative: Engelhardt, Harald
(86) International application number: JP9903604
(87) International publication number: WO0008534

(57) **Abstract**

Provided at the front end of each transport mover (V) are proximity sensors (23, 24) for detecting an object by generating alternating current magnetic fields facing upward and having different frequencies and by allowing energy to be lost by currents generated by the alternating current magnetic fields. A decelerator/stopper (W) forming two resonance circuits resonating at the frequencies of the proximity sensors (23, 24) is provided on a lateral side of a guide rail (B) in an opposed relation to the proximity sensors (23, 24). A to-be-detected plate (25) for prevention of rear-end collision is provided at the rear end of the transport mover (V). The to-be-detected plate (25) can enter a space between the proximity sensors (23, 24) and the decelerator/stopper (W). With this configuration, unlike conventional cases, there is no need to form through holes in the guide rail for wiring when installing the decelerator/stopper (W) on the guide rail (B), thereby facilitating the installing work.

## Description

### TECHNICAL FIELD

The present invention relates to a travel control system for a plurality of transport movers self-propelled along a travel path.

### BACKGROUND ART

As to conventional travel control systems for transport movers, for example, a system disclosed in Japanese Unexamined Laid-open Patent Application No. 10-49232 is known.

Said travel control system has a proximity sensor provided at the front end of each transport mover for generating an alternating current magnetic field toward a guide rail and detecting an object to be detected by a loss of energy caused by an electric current generated by said alternating current magnetic field. Further, the rear end of each transport mover is provided with a rear-end collision-preventive to-be-detected plate for said proximity sensor which enters between said guide rail and said proximity sensor, and the lower surface of said guide rail is provided with a stop device opposed to the proximity sensor. This stop device comprises a resonance circuit which resonates at the generated frequency of the proximity sensor. The alternating current magnetic field generated by the proximity sensor causes a resonant electric current to flow through the resonance circuit of the stop device and the energy is consumed by the resulting resistance, thereby allowing the proximity sensor to detect the stop device.

According to the above arrangement, the proximity sensor is capable of detecting the rear-end collision-preventive to-be-detected plate provided at the rear end of a transport mover traveling ahead, and the stop device provided at the mover stop position along the travel path. Thus, the proximity sensor serves both as a sensor for detecting a transport mover traveling ahead and as a sensor for detecting a transport mover stop position, so that the number of sensors is reduced.

However, in said travel control system for transport movers, the lower surface of the guide rail is provided with the stop device, and the lower portion of the guide rail is provided with the roller guide contacted by sway preventive rollers for the transport mover from both lateral sides; therefore, in laying wiring for said stop device, there is no other way than one in which the guide rail is formed with a through hole extending from the lateral surface to the bottom surface so that the sway-preventive rollers for the transport mover may not contact the wiring; thus, the operation has been difficult. Further, in changing the stop position of the mover at worksite, it is necessary to drill holes in the guide rail at worksite, which forces an operator to assume an uncomfortable working position at a high place, increasing the burden on the operator and reducing the operating efficiency.

Further, installing the stop device on the lower surface of the guide rail poses a problem that the height of the transport mover is increased in order to obtain a clearance between the stop device and a transport carriage.

### DISCLOSURE OF THE INVENTION

Accordingly, it is an object of the present invention to provide a travel control system for transport movers, which is capable of reducing the burden on the operator and improving the operating efficiency.

To achieve the above object, the invention provides a travel control system for a plurality of transport movers which are fed with current from a current feeding device provided along a guide rail and self-propelled as being guided by said guide rail, characterized by comprising: a proximity sensor provided at the front end of each of said movers, and generating an alternating current magnetic field and detecting an object to be detected by a loss of energy from the magnetic field, said loss of energy resulting from feeding a current to the object from the magnetic field; a first to-be-detected object for said proximity sensor, projectingly provided on one side of said guide rail and indicating a transport mover stop position; and a second to-be-detected object for said proximity sensor, provided at the rear end of each of said movers and adapted to enter between said first to-be-detected object and said proximity sensor; said first to-be-detected object comprising a resonance circuit which resonates with a frequency generated by said proximity sensor.

According to the above arrangement, the proximity sensor detects the second to-be-detected object provided at the rear end of a transport mover traveling ahead and the first to-be-detected object provided at the transport mover stop position along the guide rail. Further, the projecting provision of the first to-be-detected object for the proximity sensor on one side of the guide rail eliminates the conventional need for forming through holes in the guide rail for wiring as in the prior art, thus facilitating the operation for attaching the first to-be-detected object.

### BRIEF DESCRIPTION OF THE DRAWINGS

Fig. 1 is a side view of a transport mover equipped with a travel control system for transport movers according to an embodiment of the invention, and a travel path;
Fig. 2 is a front view, partly in section, of said transport mover equipped with said travel control system for transport movers, and the travel path;
Fig. 3 is a view showing the positional relation of said travel control system for transport movers;
Fig. 4 is a side view and a bottom view of a deceleration/stop device for the travel control system for transport movers;
Fig. 5 is a circuit diagram for said deceleration/stop device for the travel control system for transport movers;
Fig. 6 is an explanatory view of a travel control system for transport movers according to another embodiment of the invention; and
Fig. 7 is an explanatory view of a travel control system for transport movers according to another embodiment of the invention.

### EMBODIMENTS OF THE INVENTION

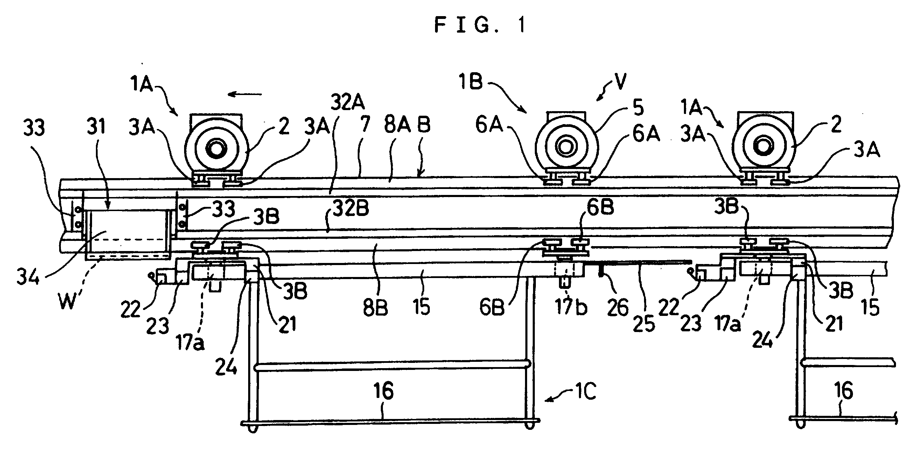

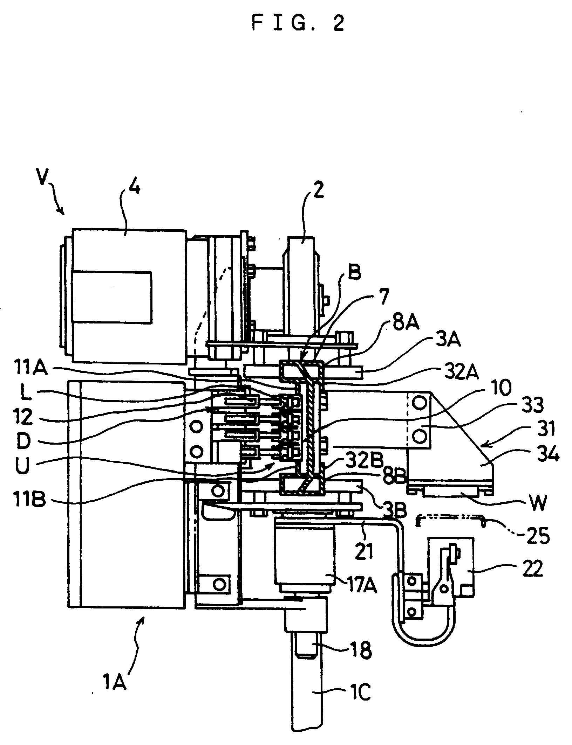

A transport mover equipped with a travel control system for transport movers according to an embodiment of the invention, and a travel path therefor will now be described with reference to Figs. 1 and 2.

A transport mover V comprises driving trolleys 1A, a driven trolley 1B, and an article transport carrier 1C supported by these trolleys 1A and 1B. Further, a guide rail B for the travel path is provided for guiding the movement of said transport mover V.

The driving trolley 1A includes a travel wheel 2 which travels on the upper surface of the guide rail B, sway-preventive rollers 3A and 3B contacting the upper and lower portions of the guide rail B from opposite lateral sides, a current collecting unit D, and a speed reducer equipped electric motor 4 for driving the travel wheel 2.

Further, the driven trolley 1B includes a travel wheel 5 traveling on the upper surface of the guide rail B, and sway-preventive rollers 6A and 6B contacting the upper and lower portions of the guide rail B from opposite lateral sides.

The guide rail B includes a wheel guide 7 on its upper surface, and roller guides 8A and 8B in its upper and lower portions, and is supported by being suspended from the ceiling or the like by a support frame (not shown) connected to a lateral side. Further, a current feeding rail unit U is attached to the side opposite to the side to which the support frame of the guide rail B is attached. The guide rail B is made of aluminum.

Said current feeding rail unit U is provided to feed three-phase alternating current power to the transport mover V and transmit a travel control signal to the transport mover V; there are four current feeding rails L. A rail support frame 10 supporting the current feeding rails L in juxtaposed relation is engagingly secured to a pair of upper and lower engaging portions 11A and 11B provided on the guide rail B.

In the current collecting unit D, a pair of current collectors 12 are provided for each current feeding rail L, and pairs of current collectors 12, one pair for each current feeding rail L, are spaced longitudinally of the transport mover V. Further, four current collectors 12 in the front region of a mover body are arranged as a single unit and so are four current collectors 12 in the rear region of the mover body.

The carrier 1C comprises a connecting member 15 connecting both trolleys 1A and 1B, and a to-be-transported object support block 16 suspended from the connecting member 15. And both trolleys 1A and 1B are connected to bearing members 17a and 17b attached to the front and rear ends of the connecting member 15 so that the trolleys may be rotated around the vertical support shafts 18 of both trolleys 1A and 1B.

Further, a bracket 21 extending not only forwardly and rearwardly but also laterally is attached to the front bearing member 17a of the connecting member 15. Located forwardly of the front bearing member 17a of said bracket 21, as seen from front, are a rear-end collision detector 22 comprising a limit switch, and a first proximity sensor 23 which generates an alternating current magnetic field of high frequency wave (for example, 300 kHz) directed upward and which detects an object according to a loss of energy caused by an electric current generated by said alternating current magnetic field. Further, located rearwardly of the front bearing member 17a of the bracket 21 is a second proximity sensor 24 which generates an alternating current magnetic field of high frequency wave different from that of said first proximity sensor 23 (for example, 500 kHz) directed upward and which detects an object according to the loss of energy caused by an electric current generated by said alternating current magnetic field. The first proximity sensor 23 is used for detection of a transport mover V ahead and for deceleration position detection, and the second proximity sensor 24 is used for detection of a transport mover V ahead and for transport mover stop position detection.

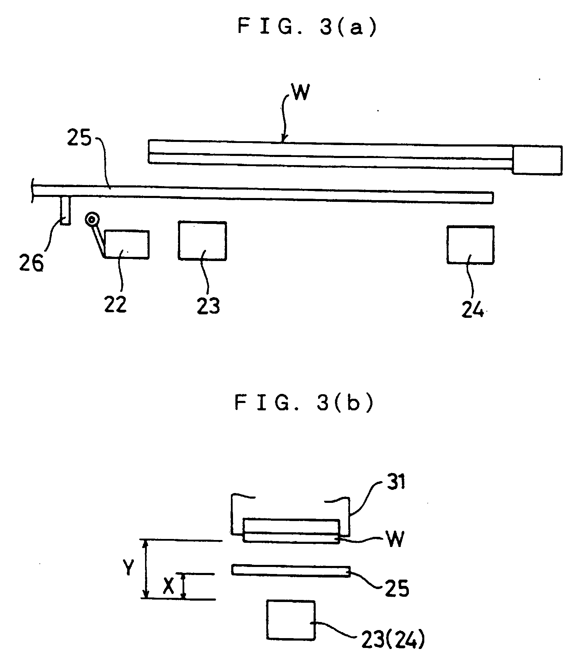

Further, attached to the rear bearing member 17b of the connecting member 15, as shown in Fig. 3, is a rearwardly extending rear-end collision preventive to-be-detected plate (an example of a second to-be-detected object) 25 of iron at a height between the first and second proximity sensors 23, 24 and a deceleration/stop device (an example of a first detection object) W to be later described. Further, the rear-end collision preventive to-be-detected plate 25 is provided with a to-be-detected object 26 for actuating a rear-end collision detector 22 comprising a limit switch. The rear-end collision preventive to-be-detected plate 25 is detected by the first and second proximity sensors 23 and 24.

The actuation of said rear-end collision detector 22 stops the feeding of current to the motor 4 to stop the transport mover V. Even when the first and second proximity sensors 23 and 24 fail to actuate, the rear-end collision detector 22 makes it possible to prevent the transport mover V from colliding with the rear of a transport mover V ahead. As shown in Fig. 3 (a), the position at which said to-be-detected object 26 is attached to the rear-end collision preventive to-be-detected plate 25 is such that after the rear-end collision preventive to-be-detected plate 25 reaches the position of the second proximity sensor 24, it contacts the rear-end collision detector 22.

A bracket 31 is attached to a side opposite to the side to which the current feeding rail unit U for the guide rail B is attached, said bracket 31 having said deceleration/stop device attached thereto.

Said bracket 31 comprises a pair of front and rear support members 33, engagingly secured to a pair of upper and lower engaging-securing portions 32A and 32B provided on the guide rail B and perpendicularly screwed to the sides of the guide rail B, and an attaching member 34 of L-shaped cross section attached between the ends of said support members 33. Further, the deceleration/stop device W is attached to the bottom surface of the attaching member 34.

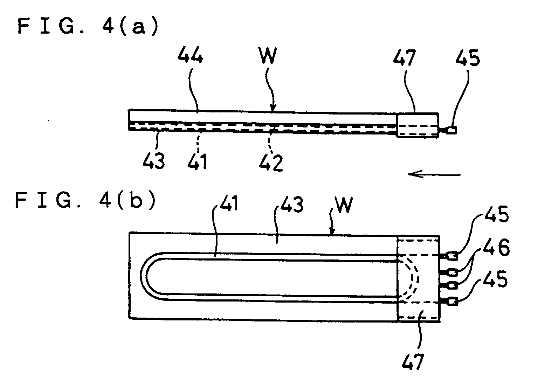

The deceleration/stop device W, as shown in Fig. 4, comprises a printed circuit board 43 having a plurality of turns of first coil 41 and second coil 42 molded on the surface thereof, a ferrite plate 44 having said printed circuit board 43 fixed to the lower surface thereof, led-out terminals 45 connected to opposite ends of the first coil 41, and led-out terminals 46 connected to opposite ends of the second coil 42, and a high frequency magnetic field shield element 47 attached to the ends of the printed circuit board 43 and ferrite plate 44 associated with the entering direction of the transport mover V.

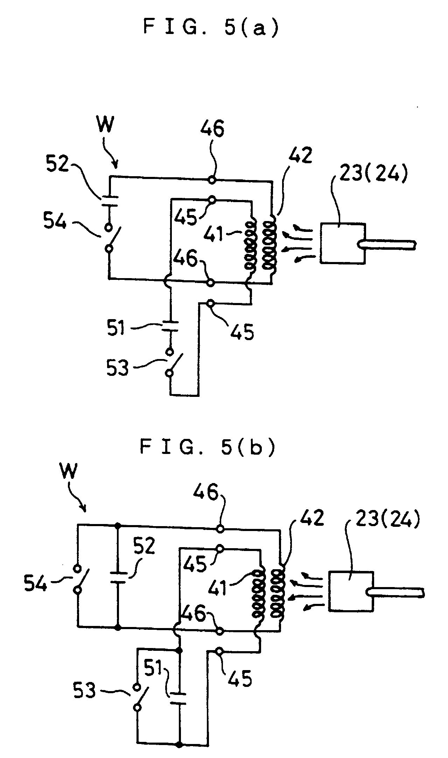

And as shown in Fig. 5 (a), said first coil 41 and an external first capacitor 51 form a first resonance circuit which resonates at the generated frequency (said 300 kHz) of the first proximity sensor 23, while said second coil 42 and an external second capacitor 52 form a second resonance circuit which resonates at the generated frequency (said 500 kHz) of the second proximity sensor 24. Further, a deceleration switch 53 is connected in series with the first capacitor 51 between the led-out terminals 45 of said deceleration/stop device W. When the deceleration switch 53 is turned on, the first resonance circuit is rendered resonant, and when the deceleration switch 53 is turned off, the first resonance circuit is rendered nonresonant. Further, a stop switch 54 is connected in series with the second capacitor 52 between the led-out terminals 46 of said deceleration/stop device W. When the stop switch 54 is turned on, the second resonance circuit is rendered resonant, and when the stop switch 54 is turned off, the second resonance circuit is rendered nonresonant. In addition, the capacitors 51 and 52 together with the coils 41 and 42 may be molded in the board 43.

Fig. 3 (b) shows the positional relationships between the deceleration/stop device W, the rear-end collision preventive to-be-detected plate 25, and the first and second proximity sensors 23 and 24.

When the rear-end collision preventive to-be-detected plate 25 is positioned at a detection distance X (e.g., 20 mm) from the first and second proximity sensors 23 and 24 and the deceleration/stop device W forms a resonance circuit, the deceleration/stop device W is positioned at a distance Y which enables detection by the first and second proximity sensors 23 and 24.

If the first resonance circuit which resonates at the generated frequency of the first proximity sensor 23 is present, it resonates with the alternating current magnetic field of the first proximity sensor 23, so that an electric current flows through the first coil 41 and energy is consumed in the resistance of the circuit; whereby the first proximity sensor 23 detects the first resonance circuit. Further, if the second resonance circuit which resonates at the generated frequency of the second proximity sensor 24 is present, it resonates with the alternating current magnetic field of the second proximity sensor 24, so that an electric current flows through the second coil 42 and energy is consumed in the resistance of the circuit, whereby the second proximity sensor 24 detects the second resonance circuit.

At this time, it is possible to increase the detection distance Y for the first and second proximity sensors 23 and 24 (to double the detection distance X) and to increase the detection distance between the first and second proximity sensors 23 and 24 and the resonance circuit, i.e., the deceleration/stop device W. If, therefore, the deceleration/stop device W is disposed at a position farther than the ordinary detection distance X and nearer than the detection distance Y, it is possible to create a situation such that the deceleration/stop device W is detected only during the resonance while it is not detected during the nonresonance.

Operation of the above arrangement will now be described.

Transport mover V is fed from the current feeding rail L of the current feeding rail unit U of the guide rail B through the current collectors 12, and when the proximity sensors 23 and 24 are off, current is fed to the speed reducer equipped electric motor 4. The speed reducer equipped electric motor 4 thus fed drives the travel wheel 2, so that the transport mover V travels while being guided by the guide rail B.

As the transport mover V travels, it approaches a transport mover V ahead, and the proximity sensor 23 or 24 detects the rear-end collision preventive to-be-detected plate 25 of the transport mover V ahead, and when turned on, the feeding of current to the speed reducer equipped electric motor 4 is cut off, the driving of the travel wheel 2 by the speed reducer equipped electric motor 4 is stopped, so that the transport mover V stops. Thus, the transport mover V avoids colliding with the rear of the transport mover V ahead.

Further, when the deceleration/stop position W is passed by, if the deceleration switch 53 is turned on in the deceleration/stop device W to form the first resonance circuit, then first proximity sensor 23 detects this first resonance circuit and turns on. Thereupon, the voltage (or frequency) to be fed to the speed reducer equipped electric motor 4 is set at a lower value, thereby reducing the rpm of the speed reducer equipped electric motor 4, the rpm of the travel wheel 2, and the speed of the transport mover V. Therefore, the transport mover V is decelerated at the position where the deceleration/stop device W is attached. When the deceleration switch 53 is turned off in this state, the first resonance circuit is rendered nonresonant, thereby turning off the first proximity sensor 23, and restoring the voltage fed to the speed reducer equipped electric motor 4 to the original value and the speed of the transport mover V to the original value.

Further, when the deceleration/stop position W is passed by, if the stop switch 54 is turned on in the deceleration/stop device W to form the second resonance circuit, then second proximity sensor 24 detects this second resonance circuit and turns on. Thereupon, the feeding of current to the speed reducer equipped electric motor 4 is cut off, stopping the driving of the travel wheel 2 by the speed reducer equipped electric motor 4, so that the transport mover V stops. Therefore, the transport mover V stops at the predetermined stop position. When the stop switch 54 of the deceleration/stop device W is turned off in this state, the second resonance circuit is rendered nonresonant, thereby turning off the second proximity sensor 24, and resuming the feeding of current to the speed reducer equipped electric motor 4; thus, the transport mover V starts to travel. In addition, if the stop switch 54 is turned off before the transport mover V comes near the stop position, the detection by the second proximity sensor 24 does not take place, so that the transport mover V passes the stop position.

Further, if something unusual occurs in the first proximity sensor 23 or the second proximity sensor 24 and the first proximity sensor 23 or the second proximity sensor 24 does not function while the transport mover V quickly approaches the transport mover V ahead, then the rear-end collision detector 22 operates to stop the feeding of current to the motor 4, stopping the transport mover V. Therefore, the transport mover V is prevented from colliding with the rear of the transport mover V ahead.

Thus, projectingly installing the deceleration/stop device W on a lateral side of the guide rail B eliminates the conventional need for forming through holes in the guide rail B for wiring in order that the sway-preventive rollers 3B and 6B of the mover V may not contact the wiring, thereby facilitating the operation for attaching the deceleration/stop device W, reducing the burden on an operator, and improving operating efficiency. Further, when it is desired to change the position of attachment of the deceleration/stop device W at worksite, the operation for such change can be facilitated, thus reducing the burden on the operator, and improving the operating efficiency. Further, as compared with the height of a transport mover with a stop device provided on the lower surface of the guide rail as in the prior art, the height of the transport mover V can be reduced.

Further, the provision of the rear-end collision detector 22 comprising a limit switch on the front end ensures that even when the first proximity sensor 23 or the second proximity sensor 24 (particularly the second proximity sensor 24) does not function, the transport mover V is prevented from colliding with the rear of the transport mover ahead, so that reliability can be improved.

Further, the first and second proximity sensors 23 and 24 can serve also as rear-end collision preventive detection sensors (storage sensors), thereby making it possible to reduce the number of sensors and the amount of wiring for the transport mover V and reduce cost. Further, the deceleration/stop device W, the rear-end collision preventive to-be-detected plate 25, and the first and second proximity sensors 23 and 24 can be spaced from each other to prevent malfunction or erroneous nonoperation due to the sway of the transport mover V. Further, the detection means for deceleration (the first coil 41) and the detection means for stoppage (the second coil 42) can be simultaneously produced, so that the space and operation for attachment, and cost can be reduced.

In addition, in the above embodiment, the feeding of current to the transport mover V has been effected by using the current feeding rail L and current collectors 12; however, the invention is also applicable to a transport mover which is fed with current in a contactless manner.

In addition, in the above deceleration/stop device W, the deceleration switch 53 is connected in series with the capacitor 51 and the stop switch 31 connected in series with the capacitor 52. However, as shown in Fig. 5 (b), the deceleration switch 53 and stop switch 54 may be connected in parallel with the capacitors 51 and 52. In this case, when the deceleration switch 53 and stop switch 54 are turned off, the resonance state appears, and when they are turned on, the resonance state disappears.

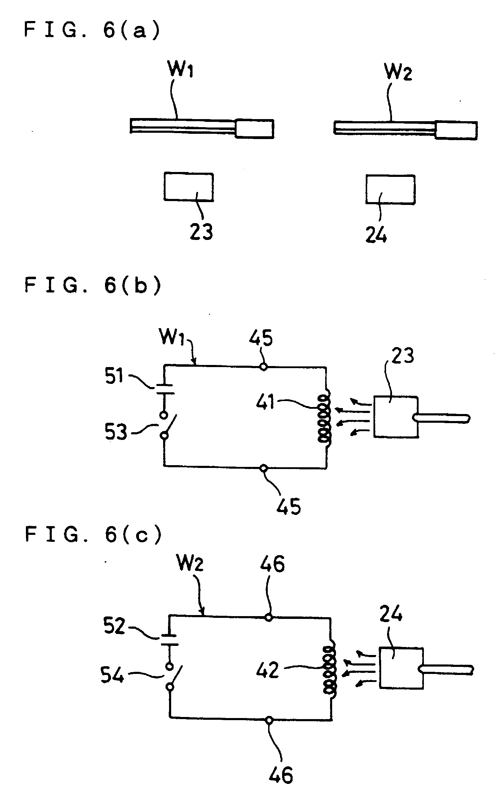

In addition, in the above embodiment, the first to-be-detected object is constituted by the single deceleration/stop device W; however, as shown in Fig. 6 (a), it may be constituted separately, comprising a deceleration device W₁ detectable by the first proximity switch 23 and a stop device W₂ detectable by the second proximity switch 24. In this case, the deceleration device W₁, as shown in Fig. 6 (b), is composed of said first coil 41, external first capacitor 51, and deceleration switch 53, wherein when the deceleration switch 53 is turned on, there is formed the first resonance circuit which resonates at the generated frequency (said 300 kHz) of the first proximity sensor 23. Further, the deceleration device W₂, as shown in Fig. 6 (c), is composed of said second coil 42, external second capacitor 52, and stop switch 54, wherein when the stop switch 54 is turned on, there is formed the second resonance circuit which resonates at the generated frequency (said 500 kHz) of the second proximity sensor 24.

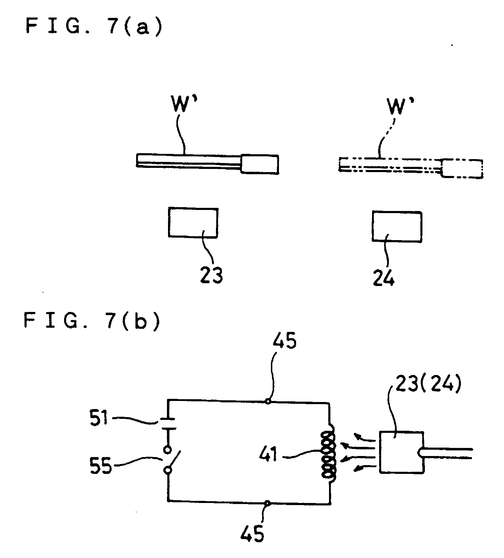

Further, in the above embodiment, the first to-be-detected object is constituted by the single deceleration/stop device W, comprising the first resonance circuit which resonates at the generated frequency (said 300 kHz) of the first proximity sensor 23 and the second resonance circuit which resonates at the generated frequency (said 500 kHz) of the second proximity sensor 24. However, the generated frequencies of the first and second proximity sensors may be made equal, and a single resonance circuit may be formed which resonates at this sole generated frequency (for example, 300 kHz). In this case, the deceleration/stop device W' shown in Fig. 7 (a) is composed of a series combination of said first coil 41, external first capacitor 51 and deceleration/stop switch 55, as shown in Fig. 7 (b). When the deceleration/stop switch 55 is turned on, there is formed a resonance circuit which resonates at the generated frequency (said 300 kHz) of the first and second proximity sensors 23 and 24. When the deceleration/stop switch 55 is turned on solely by the timing of passage of the first proximity sensor 23, the first proximity sensor 23 alone functions, and the transport mover V decelerates. When the deceleration/stop switch 55 is turned on successively by the timing of passage of the first and second proximity sensors 23 and 24, the first and second proximity sensors 23 and 24 function and the transport mover V stops.

## Claims

1. A travel control system for a plurality of transport movers which are fed from a current feeding device provided along a guide rail and self-propelled as being guided by said guide rail, characterized by comprising:
a proximity sensor provided at the front end of each of said movers, and generating an alternating current magnetic field and detecting an object to be detected according to a loss of energy from the magnetic field, said loss of energy resulting from feeding a current to the object from the magnetic field;
a first to-be-detected object for said proximity sensor, projectingly provided on one side of said guide rail and indicating a transport mover stop position; and
a second to-be-detected object for said proximity sensor, provided at the rear end of each of said movers and adapted to enter between said first to-be-detected object and said proximity sensor;
said first to-be-detected object comprising a resonance circuit which resonates with a frequency generated by said proximity sensor.

2. A travel control system for transport movers as set forth in Claim 1, characterized in that said first to-be-detected object, second to-be-detected object and proximity sensor are arranged in this order, laterally of said guide rail.

3. A travel control system for a plurality of transport movers which are fed from a current feeding device provided along a guide rail and self-propelled as being guided by said guide rail, characterized by comprising:
a first proximity sensor and a second proximity sensor both provided at the front end of each of said movers, and generating an alternating current magnetic field toward said guide rail and detecting an object to be detected according to a loss of energy from the magnetic field, said loss of energy resulting from feeding a current to the object from the magnetic field;
a first to-be-detected object for said first and second proximity sensors, projectingly provided on one side of said guide rail and indicating a transport mover stop position; and
a second to-be-detected object for said first and second proximity sensors, provided at the rear end of each of said movers and adapted to enter between said first to-be-detected object and said first and second proximity sensors;
said first to-be-detected object comprising resonance circuits respectively resonating with frequencies generated by said first and second proximity sensors.

4. A travel control system for transport movers as set forth in Claim 3, characterized in that said first to-be-detected object, second to-be-detected object, first proximity sensor and second proximity sensor are arranged in this order in a downward relation, laterally of said guide rail.
